# EUROPEAN PATENT APPLICATION

(11) **EP 2 515 037 A1**
(43) Date of publication of application: **24.10.2012**
(21) Application number: 11163366.5
(22) Date of filing: 21.04.2011
(51) Int. Cl.: F23C 10/00, F23C 99/00

(54) **Fixed bed chemical looping combustion**

(71) Applicant: Nederlandse Organisatie voor Toegepast -Natuurwetenschappelijk Onderzoek TNO, 2628 VK Delft (NL)
(72) Inventor: Geerdink, Peter, 2628VK Delft (NL); Van den Broeke, Leo Jacques Pierre, 2628VK Delft (NL); Huizinga, Arjen, 2628VK Delft (NL); Jahn, Judith, 2628VK Delft (NL); Van den Bos, Willempje Antonie Patricia, 2628VK Delft (NL)
(74) Representative: Jansen, Cornelis Marinus

(57) **Abstract**

The invention is directed to a process for fixed bed chemical looping combustion, in particular applied to a process for regulating the heat and the carbon dioxide concentration of the air in an enclosed space within which plants and/or crops are grown.

The fixed bed chemical looping combustion process of the invention comprises passing a gas stream over a fixed bed, wherein said gas stream comprises a fuel gas and oxygen gas, wherein the oxygen gas is added to said fuel gas prior to passing the gas stream over the fixed bed.

## Description

The invention is directed to a process for fixed bed chemical looping combustion, in particular applied to a process for regulating the heat and the carbon dioxide concentration of the air in an enclosed space within which plants and/or crops are grown.

The process called chemical looping combustion (CLC) is based on combustion with the use of an intermediate oxygen carrier that is generally cycled between two reactors, *i.e.* an oxidising reactor and a reducing reactor. In the oxidising reactor, metal particles are brought into contact with air to produce metal oxides and heat, which can subsequently be transformed into electricity. The reducing reactor contacts the fuel, in general methane, with the metal oxides to create metal once again and also CO₂ and water, while chemically storing the energy of the methane. In the reducing reaction, no heat is produced (Hossain et al., Chemical engineering science 2008, 63, 4433-4451).

Most research is focussed on an application of CLC using fluidised beds. Generally fluidised bed technology is proven in industry in combustion processes. The inventors, however, focus on a fixed bed application of CLC. In fluidised beds, cycle times, attrition and fuel conversion are key factors. Most research is therefore based on finding the ideal oxygen carrier that has a long lifetime and high reactivity. These oxygen carriers will therefore be expensive, custom made materials. When a fixed bed is used, the main challenges are to avoiding cokes formation and sintering. Cokes formation makes oxygen carriers unavailable and blocks the bed. Sintering means coagulation of the metal particles, which limits available oxygen carrier surface. Besides this, the use of inexpensive materials is key to the development of CLC, since it is important to make the whole system financially feasible, because the cycle times in fixed beds are much longer and therefore more oxygen carrier is required for a system.

A small scale CLC setup for the use in greenhouses is described in WO-A-2006/123925. This describes a method for regulating the heat and the CO₂ concentration of the air in greenhouses. At night and during cold periods heat is required in greenhouses to keep the temperature at a desired level. During the day and during warm periods, CO₂ is required to increase the plant production rate. Conventionally, natural gas is burned for greenhouses to produce CO₂ during the day and during warm periods. At the same time, the produced heat is stored in the form of hot water using a buffer. The heat stored in the water buffers is then used at night or during cold periods. In this way, by combining the production of CO₂ with the storage of heat, energy losses are reduced. However, a more optimal solution is possible when the heat and the CO₂ are available when needed. This requires that the production of heat and CO₂ are decoupled, which is possible using CLC. In accordance with the method described in WO-A-2006/123925 an oxygen-containing gas and a hydrocarbon-containing gas are alternately passed over particles that are capable of binding oxygen. The oxygen-containing gas oxidises the particles while releasing heat, while the hydrocarbon-containing gas reduces the oxidised particles under formation of water and CO₂. In accordance with this process, the CO₂ production and the heat production are separated, while losses are minimised.

In the process of WO-A-2006/123925 a number packed-bed CLC reactors are placed in parallel, such that the oxidation and reduction step can be performed independently. As a result, a system is obtained with a large flexibility in the amount of CO₂ and/or heat that can be produced at a specific moment. This allows an optimal adaptation of greenhouses to the varying weather conditions. Storage of heat in a CLC packed-bed reactor can be achieved without any significant losses.

As in all CLC processes, the oxygen carrier plays a vital role in optimising the performance of the process. It is important that the capacity of the oxygen carrier is high, because a large buffer capacity is desired. For a packed bed configuration the reactivity of the oxygen carrier is less important, because in a packed bed the fuel has a much longer contact time with the oxygen carrier, as compared to the situation of a fluidised bed. Another factor that plays a critical role is the price of the oxygen carrier. In order to store a large amount of heat in the packed bed, a large amount of oxygen carrier is required.

A further drawback of convention CLC processes is the formation of cokes within the fixed bed. Cokes will reduce the available surface of the oxygen carrier and decrease permeability of the bed, thereby increasing the pressure drop. The usual way of reducing cokes formation is by adding steam. Although the addition of steam is a very easy option in a power plant (because it is readily available on site), it is not always readily available for small scale applications.

Objective of the invention is therefore to provide a process for fixed bed chemical looping combustion having a minimal level of cokes formation.

The inventors surprisingly found that this objective can be met by including an amount of oxygen in the fuel gas.

Accordingly, in a first aspect the invention is directed to a process for fixed bed chemical looping combustion, comprising passing a gas stream over a fixed bed, wherein said gas stream comprises a fuel gas and oxygen gas, wherein the oxygen gas is added to said fuel gas prior to passing the gas stream over the fixed bed.

It was found that the addition of oxygen to the fuel gas aids in inhibiting cokes formation. Reducing the amount of cokes formation is highly desirable in the development and design of fixed bed chemical looping combustion systems. The formation of cokes is far more critical in fixed beds than in fluidised beds, because in fluidised beds cokes will be brunt off the oxygen carrier in the oxidation reactor and will result in some carbon dioxide losses to the atmosphere but not affect the performance of the chemical looping combustion system much.

Advantageously, the addition of oxygen gas to the fuel gas results in a reduction of pressure drop formation. When the oxygen gas is added to the fuel gas in the form of air (which is advantageous in view of abundance), then slightly less pure carbon dioxide will be produced, because the carbon dioxide will be contaminated with a small amount of nitrogen. However, for many applications (such as in horticulture), the production of slightly less pure carbon dioxide is not very important, and pales into insignificance beside the advantageous reduction in cokes formation.

The equilibrium reaction that is important in this process is the Bouduard reaction shown in equation (1).

2 *CO* ↔ *CO*₂ +*C*_{(*s*)} (1)

This reaction takes place in the overall reaction shown in equation (2).

*CO* + 3 *H*₂ + 4 *MeO* → *CO*₂ + 3 *H₂O* + 4 *Me* (2)

Without wishing to be bound by any theory, the inventors believe that when oxygen is unavailable in a part of the reactor, the temperature in the reactor will result in a formation of cokes (C₍ₛ₎). The conversion of the equilibrium reaction can be influenced by adding CO₂, O₂, or H₂O to the carbon monoxide stream. This means that the conversion in backward reaction will increase and more CO will be produced. Overall, this will advantageously result in less cokes being formed.

The gas stream which passes the fixed bed preferably comprises an amount of 1-10 vol.% of oxygen gas relative to the volume of the fuel gas, preferably 2-8 vol.%, more preferably 3-6 vol.%. The inventors experimentally found that at a concentration of about 4 vol.%, the formation of cokes is optimally reduced.

Preferably, the oxygen gas is added to the fuel gas in the form of air. This is advantageous since air is readily available and can usually be added to the fuel gas in a simple manner. In a preferred embodiment, the gas stream passing the fixed bed consists of fuel gas and air. The amount of added air can then, for instance, be 5-48 vol.% relative to the volume of the fuel gas, such as 10-38 vol.%, or 14-29 vol.%.

The fixed bed normally comprises a metal and/or metal oxide, which typically functions as an oxygen carrier. Preferably, the metal and/or metal oxide is present in the form of particles. Optionally, the fixed bed can comprise a carrier material. The carrier material may be comprised together with the metal and/or metal oxide in a particle. The metal can, for instance, be selected from the group consisting of copper, iron, nickel, cobalt and manganese. The metal may be present in reduced metal form or oxidised derivative state. The carrier material is preferably selected from the group consisting of alumina, silica, zirconia, and titania.

Suitably, the fixed bed comprises particles having an average particle size in the range of 1-500 µm, preferably in the range of 5-250 µm. The term "average particle size" as used in this application is meant to refer to the mean average diameter of the particles (also referred to in the art as "effective diameter", *viz.* the mean volume diameter, which is equivalent to the diameter of a sphere of equal volume to the particle being measured). The average particle size may be determined by measuring the diameter of a representative number of particles (such as 100) from a micrograph and calculate the average. Further details concerning techniques for measuring the average particle size of the metallic particles are known to those skilled in the art.

The chemically reactive particles can have a mean particle size D50 as specified by the supplier in the range of 1-500 µm, such as in the range of 2-400 µm. The chemically reactive particles preferably have a mean particle size D90 as measured by microscopy in the range of 5-200 µm, such as in the range of 7-150 µm. Depending on the particle size, the particle size distribution can for this purpose be determined by various measurement methods well-known to the person skilled in the art, including sieve analyses, optical microscopy, optical counting methods, electric counting methods, and sedimentation techniques.

In accordance with the process of the invention the fixed bed may be multiple fixed beds placed in sequence. For instance, the gas stream may be passed over two or more fixed beds consisting of different fixed bed materials. If the gas stream is passed over multiple fixed bed materials, these fixed bed materials may be contained in a single reactor or in two or more subsequent reactors.

The fixed bed may further comprise inert particulate material, preferably selected from the group consisting of silica, silica carbide, ceramics, and glass. In a preferred embodiment, the inert particulate material is divided in a first part having an average particle size larger than the average particle size of the metal or metal oxide, and a second part having an average particle size smaller than the metal or metal oxide. This embodiment is advantageous, since the larger inert particles lower the pressure drop over the fixed bed, while the smaller inert particles prevent, or at least reduce, sintering of the metal or metal oxide particles.

The fuel gas preferably comprises one or more selected from the group consisting of methane, natural gas, biogas and synthetic gas (also known as "syngas", a gas mixture containing carbon monoxide and hydrogen). In order to achieve optimal conversion, it is preferred that the fuel gas comprises methane. In an embodiment, the fuel gas comprises natural gas.

In a further aspect, the invention is directed to a process for regulating heat and carbon dioxide release, for instance in greenhouses.

Accordingly, in a preferred embodiment, the invention is directed to a process for regulating the heat and the carbon dioxide concentration of the air in an enclosed space within which plants and/or crops are grown, comprising subsequently
i) passing a first gas stream over a fixed bed, wherein said gas stream comprises a fuel gas and oxygen gas, wherein the oxygen gas is added to said fuel gas prior to passing the gas stream over the fixed bed;
ii) passing a second gas stream comprising oxygen over the first fixed bed material;
iii) alternately repeat steps i) and ii) for at least two times,
wherein the second gas stream is passed over the fixed bed materials under conditions whereby metal or metal oxide are oxidised and heat is released, after which part of the heat is provided to the enclosed space, and wherein the first gas stream is passed over the fixed bed materials under conditions whereby metal or metal oxide is chemically reduced and water and carbon dioxide are formed, after which at least part of the formed carbon dioxide is provided to the enclosed space.

The addition of the oxygen gas to the fuel gas advantageously results in a pressure drop while maintaining high conversion of fuel gas.

The oxidation and chemical reduction of metal or metal oxide are preferably carried out in a single reactor, whereby the second gas stream comprising oxygen are alternately passed over the same fixed bed. However, it is also possible that the oxidation and chemical reduction of metal or metal oxide are carried out in separate reactors which each contain a fixed bed, and the second gas stream and the first gas stream are periodically switched for establishing oxidation and chemical reduction of metal or metal oxide in each of the fixed beds in the respective reactors.

In a preferred embodiment, porous ceramic or metal pipes are used to distribute the first and second gas stream over the fixed bed(s) at a low-pressure drop.

Suitably, in accordance with this embodiment, the oxidation of metal or metal oxide takes place at a temperature in the range of 100-1500 °C and a pressure in the range of 1-100 bar. Preferably, the oxidation of metal or metal oxide takes place at a temperature in the range of 700-1100 °C and a pressure in the range of 1-2 bar.

Suitably, in accordance with this embodiment, the chemical reduction of metal or metal oxide takes place at a temperature in the range of 300-1500 °C and a pressure in the range of 1-100 bar. Preferably, the chemical reduction of metal or metal oxide takes place at a temperature in the range of 600-1100 °C and a pressure in the range of 1-40 bar.

Preferably, the carbon dioxide production occurs when photosynthesis takes place in the enclosed space. Generally, this will be during the day or in the evening when assimilation lighting is used. The enclosed space is preferably a greenhouse as used, for instance, in horticulture under glass.

Suitably, the first gas stream comprises at most 10 vol.% of oxygen, preferably at most 5 vol.% of oxygen. The second gas stream preferably comprises at least 10 vol.% of oxygen, more preferably at least 20 vol.%.

Part of the carbon dioxide formed during the chemical reduction of metal or metal oxide can advantageously be used for carbonating or debugging food products or packaging products under oxygen-free conditions.

Next, the invention will be illustrated in more detail by the following Examples.

### Examples

In the following Examples, the formation of cokes is illustrated by a build-up of pressure in the reactor that becomes less permeable. Hence, upon the formation of cokes the pressure of the reactor increases. During oxidation, a CO₂ peak is characteristic for cokes formation.

The average particle size of the particulate materials used in the Examples was as received:
Sand I (SiO₂): average particle size 201-297 µm (50-70 mesh)
Sand II (SiO₂): average particle size > 63 µm (< 230 mesh)
Copper particles: average particle size < 75 µm (> 200 mesh)

The experiments were conducted using a fixed bed configuration with: copper particles (55 wt.%) and sand (45 wt.%). The composition of the sand in the experiments was 25 wt.% of Sand I and 75 wt.% of Sand II.

### Example 1

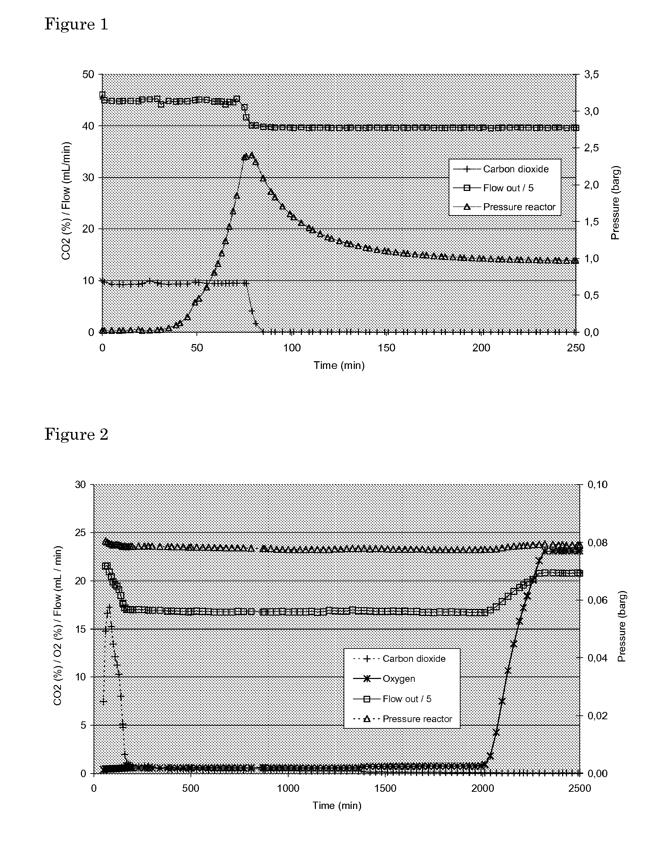

In this Example, no oxygen was present in the feed gas stream. In the case that no oxygen (air) is added to the gaseous feed during the reduction reaction coke formation will take place. A gaseous mixture of N₂ (66.7 vol.%) and syngas, that is CO (8.3 vol.%) and H₂ (25 vol.%), was passed over a fixed bed at reduction conditions and at a flow rate of 300 ml/min at 700 °C. As a consequence the pressure in the fixed bed increased significantly. As can be seen in Figure 1 after about 50 minutes the pressure started to increase to about 2.5 barg, and somewhat later the flow out of the reactor dropped. In Figure 1 the CO₂ concentration, the flow out of the reactor (the flow depicted in Figure 1 is the actual flow divided by a factor of 5), and the pressure (right y-axis) are depicted as function of the time.

### Example 2

In this Example, the oxygen carrier particles of Example 1 were oxidised. Air was passed over the fixed bed at oxidation conditions and at a flow rate of 100 ml/min and 700°C. In the case that during the reduction reaction coke is formed this is observed by the formation of CO₂ during the oxidation reaction. In Figure 2 it is seen that there is a peak in the CO₂ concentration at around 20 minutes. In Figure 2 the oxygen concentration, the CO₂ concentration, the flow out of the reactor, (the flow depicted in Figure 2 is the actual flow divided by a factor of 5), and the pressure (right y-axis) are depicted as function of the time.

### Example 3

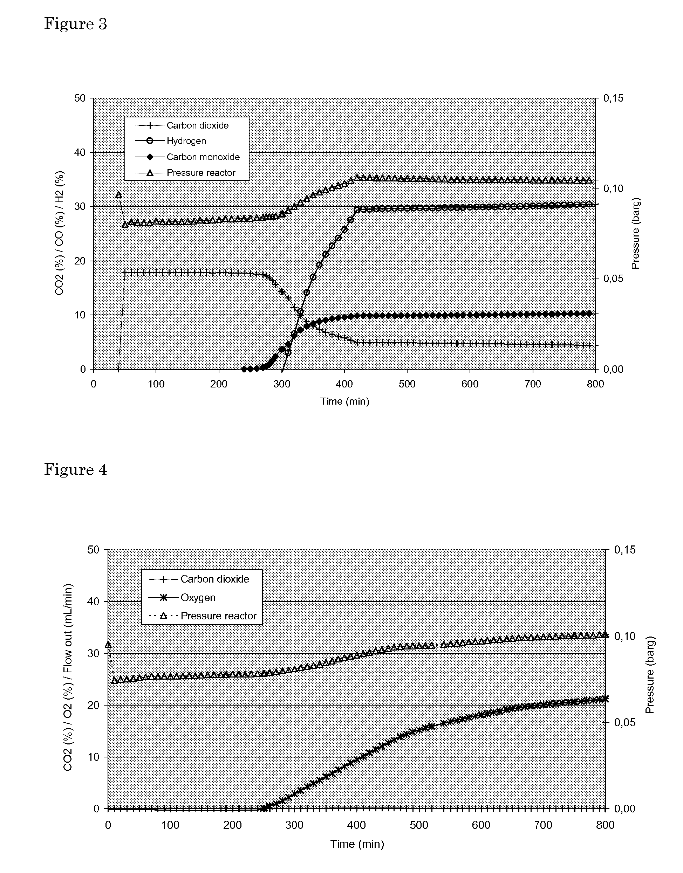

In this Example, oxygen in the form of air (15 vol.%) was added, with a total oxygen concentration of 3 vol.%. In total a gaseous mixture of CO (12.5 vol.%), H₂ (37.5 vol.%), O₂ (3 vol.%) balanced by nitrogen (35 vol.%) was passed over a fixed bed at reduction conditions and at a flow rate of 500 ml/min and 700°C. It is seen in Figure 3 that during the reduction reaction the pressure in the reactor remained almost constant. In Figure 3 the hydrogen concentration, the CO concentration, the CO₂ concentration, and the pressure (right y-axis) are depicted as function of the time.

### Example 4

In this Example, the oxygen carrier particles of Example 3 were oxidised. Air was passed over the fixed bed at oxidation conditions and at a flow rate of 400 ml/min and 700 °C. From the fact that during the oxidation reaction no CO₂ is formed it can be concluded that no coke was formed during the previous reduction reaction.

In Figure 4 it is seen that the pressure remained constant during the oxidation and that no CO₂ was present during the whole oxidation reaction. In Figure 4 the oxygen, the CO₂ concentration, and the pressure (right y-axis) are depicted as function of the time.

## Claims

1. Process for fixed bed chemical looping combustion, comprising passing a gas stream over a fixed bed, wherein said gas stream comprises a fuel gas and oxygen gas, wherein the oxygen gas is added to said fuel gas prior to passing the gas stream over the fixed bed.

2. Process according to claim 1, wherein said gas stream comprises 1-10 vol.% of oxygen gas relative to the volume of the fuel gas, preferably 2-8 vol.%, more preferably 3-6 vol.%.

3. Process according to claim 1 or 2, wherein said oxygen gas is added to said fuel gas in the form of air.

4. Process according to any one of claims 1-3, wherein the fixed bed comprises a metal and/or metal oxide, preferably in the form of particles.

5. Process according to any one of claims 4, wherein said particles have an average particle size in the range of 1-500 µm, preferably in the range of 2-500 µm.

6. Process according to any one of claims 1-5, wherein said fuel gas comprises one or more selected from the group consisting of methane, ethane, propane, and butane, preferably the fuel gas comprises natural gas.

7. Process according to any one of claims 4-6, wherein said metal is selected from the group consisting of copper, iron, nickel, cobalt, and manganese, which metal is present in reduced metal form or oxidised derivate state.

8. Process according to any one of claims 1-7, wherein said fixed bed comprises a carrier material, preferably selected from the group consisting of alumina, silica, zirconia, and titania.

9. Process according to any one of claims 1-8, wherein said fixed bed comprises multiple beds consisting of different fixed bed materials.

10. Process according to claim 9, wherein said multiple beds are contained in a single reactor or two reactors.

11. Process according to any one of claims 1-10, wherein said fixed bed comprises an inert particulate material, preferably selected from the group consisting of silica, silica carbide, ceramics, and glass.

12. Process according to any one of claims 1-8 for regulating the heat and the carbon dioxide concentration of the air in an enclosed space within which plants and/or crops are grown, comprising subsequently
i) passing a first gas stream over a fixed bed, wherein said gas stream comprises a fuel gas and oxygen gas, wherein the oxygen gas is added to said fuel gas prior to passing the gas stream over the fixed bed;
ii) passing a second gas stream comprising oxygen over the first fixed bed material;
iii) alternately repeat steps i) and ii) for at least two times,
wherein the second gas stream is passed over the fixed bed materials under conditions whereby metal or metal oxide are oxidised and heat is released, after which part of the heat is provided to the enclosed space, and
wherein the first gas stream is passed over the fixed bed materials under conditions whereby metal or metal oxide is chemically reduced and water and carbon dioxide are formed, after which at least part of the formed carbon dioxide is provided to the enclosed space.

13. Process according to claim 12, wherein the first gas stream comprises at most 5 vol.% of oxygen, and wherein the second gas stream comprises at least 20 vol.% of oxygen.

14. Process according to claim 12 or 13, wherein at least part of the carbon dioxide formed during the chemical reduction of metal or metal oxide is used for carbonating or debugging food products or packaging products under oxygen-free conditions.
